# EUROPÄISCHE PATENTSCHRIFT

(11) **EP 3 245 694 B1**
(45) Veröffentlichungstag und Bekanntmachung des Hinweises auf die Patenterteilung: **08.09.2021**
(21) Anmeldenummer: 16700560.2
(22) Anmeldetag: 12.01.2016
(51) Int. Cl.: H02H 1/00, H02H 3/16

(54) **VERFAHREN ZUR KATEGORISIERUNG EINES LICHTBOGENS BEZIEHUNGSWEISE DETEKTION EINES STÖRLICHTBOGENS**
METHOD FOR CATEGORISING AN ELECTRIC ARC OR DETECTION OF AN ARCING FAULT
PROCÉDÉ DE CATÉGORISATION D'UN ARC ÉLECTRIQUE OU DE DÉTECTION D'UN ARC ÉLECTRIQUE PARASITE

(30) Priorität: 13.01.2015 DE 102015100445
(43) Veröffentlichungstag der Anmeldung: 22.11.2017
(73) Patentinhaber: Eaton Intelligent Power Limited, Dublin 4 (IE)
(72) Erfinder: HAUER, Wolfgang, 4191 Vorderweissenbach (AT); Bartonek, Michael, 1080 Wien (AT)
(74) Vertreter: Eaton IP Group EMEA
(86) Internationale Anmeldenummer: PCT/EP2016/050490
(87) Internationale Veröffentlichungsnummer: WO 2016/113269

(56) Entgegenhaltungen:
- EP-A1- 0 249 815
- DE-A1-102007 022 401
- US-A1- 2010 073 830
- US-A1- 2014 054 270

## Beschreibung

### TECHNISCHES GEBIET

Die Erfindung betrifft ein Verfahren zur Kategorisierung eines Lichtbogens beziehungsweise Detektion eines Störlichtbogens in einem Überwachungsbereich, bei dem ein Strom in einer Zuleitung zum Überwachungsbereich sowie ein im Bereich des Überwachungsbereichs emittiertes Licht erfasst wird. Zudem betrifft die Erfindung eine Vorrichtung zur Kategorisierung eines Lichtbogens in einem Überwachungsbereich, welche zumindest ein lichtempfindliches Element zum Erfassen von Licht in einem Überwachungsbereich sowie eine Strommesseinrichtung zum Messen eines Stroms in einer Zuleitung zum Überwachungsbereich umfasst. Weiterhin umfasst die Vorrichtung eine Auswerteeinheit zum Ermitteln einer Differenzzeit zwischen dem Erkennen eines von einem Lichtbogen verursachten Stroms und eines von dem Lichtbogen verursachten Lichtblitzes. Schließlich betrifft die Erfindung einen Schaltschrank mit zumindest einem Schaltgerät und mit einer damit verbundenen Vorrichtung der genannten Art.

### STAND DER TECHNIK

Ein solches Verfahren und eine solche Vorrichtung sind grundsätzlich bekannt und werden beispielsweise in elektrischen Anlagen eingesetzt, um etwa Menschen und/oder die Anlage selbst vor den zerstörerischen Auswirkungen eines durch einen Kurzschluss verursachten Lichtbogens zu schützen oder um wenigstens dessen Auswirkungen abzumildern. Beispielsweise können Tiere oder auch herunterfallendes Werkzeug sowie (feuchter) Schmutz die Isolation beziehungsweise die Funkenstrecke zwischen zwei Leitern auf unterschiedlichem Spannungspotential derart herabsetzen, dass ein solcher Lichtbogen entsteht. Durch die teils sehr hohen resultierenden Ströme kann es zu heftigen Explosionen aufgrund der sich in kurzer Zeit aufheizenden Luft kommen.

Häufig werden elektrische Anlagen daher auf das Auftreten eine solchen Störlichtbogens überwacht, was in vielen Fällen durch die Messung des über die elektrischen Leiter fließenden Stroms und die Detektion des extrem intensiven Lichts, das von dem Lichtbogen ausgeht, erfolgt. Sind beide Kriterien erfüllt, dann wird ein Alarmsignal ausgegeben, beziehungsweise ein Schaltsignal zum Schließen eines Schalters zwischen den genannten Leitern auf unterschiedlichem Spannungspotential. Dies hat einerseits zur Folge, dass der Lichtbogen rasch gelöscht wird, andererseits auch dass sehr hohe Ströme in den Zuleitungen auftreten, welche einen übergeordneten Überstromschalter auslösen, der letztlich die gefährdete Stelle vom Netz trennt. Selbstverständlich kann das genannte Schaltsignal aber auch direkt zum Öffnen eines Schalters oder mehrerer Schalter in den Zuleitungen zum Lichtbogen dienen.

Generell ist die zweifelsfreie Erkennung eines gefährlichen, kurzschließenden Lichtbogens nach dem Stand der Technik problematisch. In elektrischen Anlagen können Lichtbögen nämlich auch im normalen Betrieb auftreten, beispielsweise in Form von Schaltlichtbögen beim Trennen eines stromführenden Schaltkontakts. Der Lichtbogen in einem Schaltgerät selbst ist in der Regel zwar nicht direkt sichtbar, allerdings kann leuchtenden Gas aus dem Schaltgerät austreten, das zumindest Metalldampf enthält, der von den abbrennenden Schaltkontakten oder Lichtbogenleitbeziehungsweise Lichtbogenlöschblechen des Schaltgeräts stammt. Daneben kann das Gas auch noch andere Bestandteile enthalten, beispielsweise verdampften Kunststoff vom Gehäuse des Schaltgeräts.

Dieses leuchtende Gas kann irrtümlich als gefährlicher Lichtbogen interpretiert und eine unnötige Abschaltung einer elektrischen, eigentlich im normalen Betrieb befindlichen, Anlage nach sich ziehen. Insbesondere kann ein solches Fehlverhalten nach dem Stand der Technik dann beobachtet werden, wenn ein Kurzschluss einer Phase gegen Masse (ohne Lichtbogen beziehungsweise mit einem Lichtbogen außerhalb des Schaltschranks) einerseits einen sehr hohen messbaren Strom in der Zuleitung, andererseits aber auch die Abschaltung eines zugeordneten Überstromschutzschalters provoziert. Durch die aus dem Überstromschutzschalter austretenden leuchtenden Gase scheinen die beiden eingangs erwähnten Bedingungen (hoher Strom und helles Licht) für einen gefährlichen Lichtbogen nämlich erfüllt zu sein.

Die US 2010/0073830 A1, die den Oberbegriff der unabhängigen Ansprüche bildet, offenbart in diesem Zusammenhang ein intelligentes elektronisches Gerät, das Lichtbögen innerhalb eines Energiesystems detektiert. Ein Lichtbogen kann unter Verwendung einer Zeitintensitätsvergleichsmetrik wie etwa einer inversen Zeit-über-Stimulus-Metrik oder einer kumulativen Stimulus-Metrik detektiert werden. Der Stimulus kann elektrooptische Strahlung, die in der Nähe des Stromsystems erzeugt wird, sowie Strommessungen enthalten. Das Gerät kann einen Lichtbogen detektieren, wenn eine oder mehrere der Stimulustypen auf ein Lichtbogenereignis hinweisen. Als Folge auf das Erkennen eines Lichtbogens kann das Gerät Schutzmaßnahmen ergreifen, beispielsweise einen Auslösebefehl ausgeben.

Die EP 2 49 815A1 offenbart darüber hinaus eine Einrichtung zur Erfassung von Störlichtbögen in einer elektrische Anlage mit mindestens einem elektrischen Schalter, welcher sich in einem abgedunkelten Innenraum befindet. Dabei werden die von den Störlichtbögen ausgehenden Lichtimpulse im Innenraum optisch erfasst und in elektrische Signale umgewandelt, welche in einer Auswertevorrichtung verarbeitet werden. Die Auswertevorrichtung wird sowohl mit elektrischen Signalen beaufschlagt, welche auf Störlichtbögen zurückzuführen sind, als auch mit Signalen, welche auf reguläre Schaltlichtbögen zurückzuführen sind.

Die DE 10 2007 022401 A1 offenbart in diesem Zusammenhang schließlich auch einen Leistungsschalter für eine Niederspannungsschaltanlage, welcher eine Überstromauswerteeinrichtung zur Erkennung eines Störlichtbogens aufweist. Zur Bewertung der Stärke eines vom Störlichtbogen herrührenden Überstroms wird ein von einem Lichtbogenüberwachungssystem eintreffendes Überstromsignal mit dem Auslösesignal der Steuereinrichtung verknüpft. Die Auslöseeinrichtung des Leistungsschalters wird bei Ausgabe eines Abschaltimpulses nur dann angesteuert, wenn das Signal der Stromerfassungseinrichtung oberhalb einer voreinstellbaren Schwelle liegt.

### OFFENBARUNG DER ERFINDUNG

Eine Aufgabe ist es daher, ein verbessertes Verfahren und eine verbesserte Vorrichtung zur Kategorisierung eines Lichtbogens beziehungsweise Detektion eines Störlichtbogens anzugeben. Insbesondere soll ein gefährlicher Lichtbogen sicher erkannt und eine unnötige Abschaltung einer elektrischen Anlage vermieden werden.

Diese Aufgabe wird mit einem Verfahren gemäß des unabhängigen Verfahrensanspruchs des Patents gelöst.

Die Aufgabe der Erfindung wird weiterhin mit einer Vorrichtung gemäß des unabhängigen Vorrichtungsanspruchs des Patents gelöst.

Die Aufgabe der Erfindung wird auch mit einem Schaltschrank mit zumindest einem Schaltgerät gelöst, der eine Vorrichtung der oben genannten Art aufweist, deren Ausgang zur Ausgabe des ersten Alarms/Schaltsignals mit einem Schalteingang des zumindest einen Schaltgeräts verbunden ist.

Schließlich wird die Aufgabe der Erfindung durch eine Verwendung eines Verfahrens der genannten Art beziehungsweise eine Verwendung einer Vorrichtung der genannten Art zur Kategorisierung eines Lichtbogens in einem Überwachungsbereich in einem Schaltschrank gelöst.

Durch die vorgeschlagenen Maßnahmen kann ein gefährlicher Störlichtbogen mit hoher Sicherheit von (potentiell ungefährlichen) Schaltlichtbögen unterschieden werden. Dabei macht man sich den Umstand zu Nutze, dass die Differenzzeit zwischen dem Zeitpunkt, zu dem ein Lichtbobgen-Strom auftritt, und dem Zeitpunkt, zu dem ein von einem Lichtbogen herrührendes Licht auftritt, im Falle eines Störlichtbogens kürzer ist als bei einem Schaltlichtbogen. Der Grund liegt darin, dass der Schaltlichtbogen an sich in der Regel unsichtbar in einem Schaltergehäuse brennt und lediglich die durch den Lichtbogen verursachten heißen, brennenden Gase nach außen dringen und damit sichtbar werden. Ein weiterer Vorteil des vorgeschlagenen Verfahrens und der vorgeschlagenen Vorrichtung ist, dass die Unterscheidung zwischen einem Störlichtbogen und einem Schaltlichtbogen respektive den leuchtenden Gasen sehr schnell und parktisch unmittelbar mit dem Auftreten eines hohen Stroms und eines Lichtblitzes erfolgt. Daher können rasch Gegenmaßnahmen zum Löschen eines Störlichtbogens, beispielsweise ein Schließen eines Kurzschlussschalters, ergriffen werden. Unnötige Abschaltungen einer elektrischen Anlage wegen einer Fehlinterpretation eines Lichtbogens können dagegen vermieden werden.

Weitere vorteilhafte Ausgestaltungen und Weiterbildungen der Erfindung ergeben sich aus den Unteransprüchen sowie aus der Beschreibung in Zusammenschau mit den Figuren.

Besonders vorteilhaft ist es auch, wenn die Differenzzeit zwischen einem Zeitpunkt, zu dem der Strom einen dritten vorgebbaren Schwellwert überschreitet, und einem Zeitpunkt, zu dem die Stärke des Lichts einen vorgebaren vierten Schwellwert überschreitet, gemessen wird. Das heißt, dass bestimmte Schwellwerte überschritten werden, um eine Kategorisierung auszulösen. Dadurch kann die Detektionssicherheit weiter verbessert werden.

Vorteilhaft ist es, wenn der erste Schwellwert und/oder der zweite Schwellwert für das vorgestellte Verfahren in einem Bereich von 0,5 ms bis 1,5 ms gewählt wird. Der erste Schwellwert ist generell niedriger als der zweite Schwellwert. Weitere vorteilhafte Wertebereiche für den ersten Schwellwert und/oder den zweiten Schwellwert sind 0,6 ms bis 1,2 ms und 0,7 ms bis 0,8 ms. In einer besonders vorteilhaften Variante kann für den ersten Schwellwert oder den zweiten Schwellwert der Wert 0,75 ms gewählt werden. Auf diese Weise kann ein Störlichtbogen sehr sicher von einem Schaltlichtbogen unterschieden werden.

Vorteilhaft ist es weiterhin, wenn der dritte Schwellwert in einem Bereich vom Fünffachen bis Zwanzigfachen des Nennstroms der Zuleitung zum Überwachungsbereich gewählt wird, vorzugsweise beim Zehnfachen. Besitzt die Zuleitung respektive ein in dieser liegender Schalter einen Nennstrom von beispielsweise 150 A, so wird der dritte Schwellwert also günstiger Weise zwischen 750 A und 3 kA gewählt, vorzugsweise bei 1,5 kA. Diese Werte stellen einen guten Kompromiss zwischen einer schnellen Kategorisierung eines Lichtbogens und dem sicheren Erkennen einer Ausnahmesituation dar. Schwellwerte darüber sind möglich, jedoch führen sie zu einer zeitlichen Verzögerung bis zum Erkennen eines Störlichtbogens.

Vorteilhaft ist es darüber hinaus, wenn der vierte Schwellwert in einem Bereich von 20.000 Im/m² bis 200.000 Im/m² gewählt wird, vorzugsweise bei 100.000 lm/m² (zum Vergleich beträgt auch die Lichtstärke an einem sonnigen Tag rund 100.000 lm/m²). Auch diese Werte stellen einen guten Kompromiss zwischen einer schnellen Kategorisierung eines Lichtbogens und dem sicheren Erkennen einer Ausnahmesituation dar. Schwellwerte darüber sind möglich, jedoch führen sie ebenfalls zu einer zeitlichen Verzögerung bis zum Erkennen eines Störlichtbogens. Entsprechend der vorgeschlagenen Maßnahmen kann die Auswerteeinheit zum Messen der Stärke des erfassten Lichts ausgebildet sein.

Günstig ist es auch, wenn die Vorrichtung zur Kategorisierung eines Lichtbogens einen Ausgang aufweist, welcher zur Ausgabe eines ersten Alarms/Schaltsignals im Falle eines im Überwachungsbereich festgestellten Störlichtbogens ausgebildet ist. Dementsprechend ist es günstig, wenn ein erster Alarm beziehungsweise ein erstes Schaltsignal ausgegeben wird, wenn im Überwachungsbereich ein Störlichtbogen festgestellt wird. Dadurch kann eine übergeordnete Steuerung oder Überwachungspersonal über die Störung in der elektrischen Anlage informiert werden. Alternativ oder zusätzlich kann das erste Schaltsignal direkt auf ein Schaltgerät geführt werden, das die elektrische Anlage im Fehlerfall automatisch von einem versorgenden Stromnetz trennt. Denkbar wäre auch, dass das erste Schaltsignal auf ein Schaltgerät geführt wird, das den Lichtbogen kurzschließt und ihn damit löscht. Der resultierende hohe Kurzschlussstrom kann dann in Folge zur Abschaltung eines Überstromschutzschalters in der betreffenden Zuleitung führen.

Das erste Schaltsignal kann also sowohl das Schließen eines Schaltkontakts als auch das Öffnen eines Schaltkontakts bewirken.

Günstig ist es zudem, wenn die Vorrichtung zur Kategorisierung eines Lichtbogens einen Ausgang aufweist, welcher zur Ausgabe eines zweiten Alarms/Schaltsignals im Falle eines im Überwachungsbereich festgestellten Schaltlichtbogens ausgebildet ist und/oder eines dritten Alarms/Schaltsignals im Falle, dass das im Überwachungsbereich erfasste Licht weder einem Störlichtbogen noch einem Schaltlichtbogen zuordenbar ist. Dementsprechend ist es günstig, wenn ein zweiter Alarm beziehungsweise ein zweites Schaltsignal ausgegeben wird, wenn im Überwachungsbereich ein Schaltlichtbogen respektive ein leuchtendes Gas festgestellt wird und/oder ein dritter Alarm beziehungsweise ein drittes Schaltsignal, wenn das im Überwachungsbereich erfasste Licht weder einem Störlichtbogen noch einem Schaltlichtbogen zuordenbar ist. Konkret wird der dritte Alarm/das dritte Schaltsignal ausgegeben, wenn die gemessene Differenzzeit zwischen Strom und Lichtblitz zwischen dem ersten und dem zweiten Schwellwert liegt.

Durch die vorgeschlagenen Maßnahmen kann dem Überwachungspersonal beziehungsweise einer übergeordneten Steuerung zusätzliche Information zur Verfügung gestellt werden. Konkret wird nicht nur ein Störlichtbogen im Schaltschrank signalisiert, sondern auch ein Schaltlichtbogen beziehungsweise ein nicht zuordenbares Ereignis. Das zweite und/oder dritte Schaltsignal kann wiederum auf ein Schaltgerät geführt werden und einen Stromkreis trennen oder schließen.

Besonders vorteilhaft ist es auch, wenn der Überwachungsbereich innerhalb eines Schaltschranks angeordnet ist. Die Vorteile der Erfindung treten hier besonders hervor, da sich innerhalb eines Schaltschranks häufig die Problematik ergibt, dass ein Störlichtbogen sicher von einem Schaltlichtbogen unterschieden werden muss.

An dieser Stelle wird angemerkt, dass sich die zum vorgestellten Verfahren offenbarten Varianten und die daraus resultierenden Vorteile gleichermaßen auf die Vorrichtung zur Kategorisierung eines Lichtbogens, den vorgestellten Schaltschrank sowie die präsentierte Verwendung eines solchen Verfahrens respektive einer solchen Vorrichtung beziehen und umgekehrt.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: die zeitlichen Verläufe eines Lichtbobgen-Stroms, einer Lichtbobgen-Spannung und einer Lichtbobgen-Lichtstärke bei Auftreten eines Störlichtbogens;
- Fig. 2: die zeitlichen Verläufe eines Lichtbobgen-Stroms, einer Lichtbobgen-Spannung und einer Lichtbobgen-Lichtstärke bei Auftreten eines Schaltlichtbogens;
- Fig. 3: beispielhafte Differenzzeiten in Abhängigkeit der Lichtbogen-Energie für zwei Schaltlichtbögen und einen Störlichtbogen;
- Fig. 4: einen beispielhaften Schaltschrank mit einer Vorrichtung zur Kategorisierung eines Lichtbogens und
- Fig. 5: ähnlich wie Fig. 3, jedoch mit einer Einrichtung zur Löschung eines Lichtbogens.

### DETAILIERTE BESCHREIBUNG DER ERFINDUNG

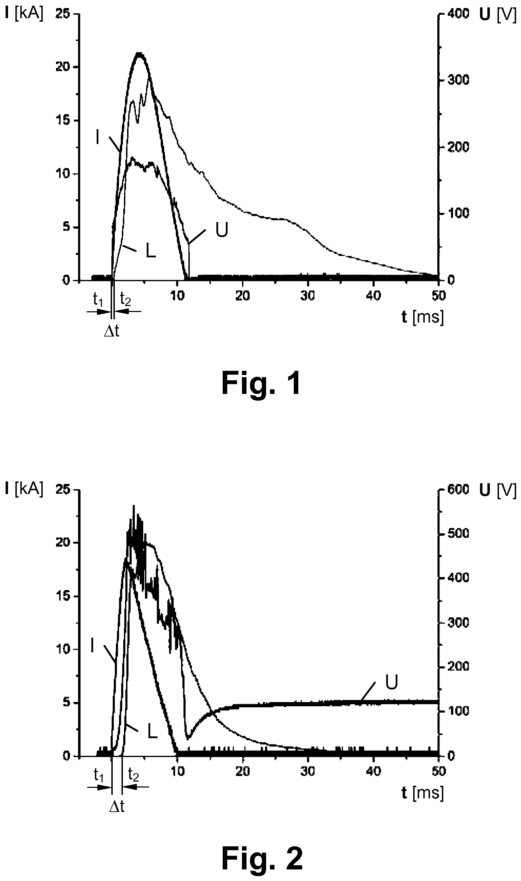

Die Figuren 1 und 2 zeigen die zeitlichen Verläufe eines Lichtbobgen-Stroms I, einer Lichtbobgen-Spannung U und einer Lichtbobgen-Lichtstärke L bei Auftreten eines Störlichtbogens (Fig. 1) und bei Auftreten eines Schaltlichtbogens (Fig. 2) während einer positiven Sinushalbwelle eines Wechselstroms mit 50 Hz Netzfrequenz.

Die auf den Achsen aufgetragen Größen sind rein illustrativ und schränken die nachfolgende technische Lehre nicht auf bestimmte Wertebereich der angegebenen Parameter ein. Selbstverständlich können auch andere Werte für den Lichtbobgen-Strom I, die Lichtbobgen-Spannung U, die Lichtbobgen-Lichtstärke L und eine Netzfrequenz auftreten. Zusätzlich ist anzumerken, dass zumindest in der Fig. 2 vor dem Auftreten des Schaltlichtbogens ein Strom über die Schaltkontakte des zu öffnenden Schalters fließt, um einen Schaltlichtbogen überhaupt erzeugen zu können. Dieser bewegt sich jedoch im Bereich eines Nennstroms des genannten Schalters, beispielsweise bei 150 A, und ist deshalb in dem dargestellten Diagramm praktisch nicht sichtbar.

In beiden Fällen steigen der Lichtbobgen-Strom I, die Lichtbobgen-Spannung U und die Lichtbobgen-Lichtstärke L stark an und fallen dann wieder ab. Lediglich die Lichtbobgen-Spannung U steigt nach einem Abfall wieder auf einen konstanten Wert um die 100 V an. Dies ist lediglich durch den Testaufbau bedingt, in einer realen Umgebung würde die Lichtbobgen-Spannung U normalerweise nicht wieder ansteigen.

Das vorgestellte Verfahren macht sich nun den Umstand zu Nutze, dass die Differenzzeit Δt zwischen dem Zeitpunkt t1 des steilen Anstiegs des Lichtbobgen-Stroms I und dem Zeitpunkt t2 des steilen Anstiegs der Lichtbobgen-Lichtstärke L im Falle eines Störlichtbogens kürzer ist als bei einem Schaltlichtbogen. Der Grund liegt darin, dass der Schaltlichtbogen an sich in der Regel unsichtbar in einem Schaltergehäuse brennt und lediglich die durch den Lichtbogen verursachten heißen, brennenden Gase nach außen dringen und damit sichtbar werden.

Bei einem Verfahren zur Kategorisierung eines Lichtbogens in einem Überwachungsbereich wird somit ein Strom in einer Zuleitung zum Überwachungsbereich sowie ein im Bereich des Überwachungsbereichs emittiertes Licht erfasst, und der Lichtbogen wird als Störlichtbogen kategorisiert, wenn die Differenzzeit Δt zwischen dem Erkennen eines von einem Lichtbogen verursachten Stroms I und eines von dem Lichtbogen verursachten Lichtblitzes L unterhalb eines vorgebbaren ersten Schwellwerts liegt.

Weiterhin wird der Lichtbogen als Schaltlichtbogen kategorisiert, wenn die genannte Differenzzeit Δt oberhalb eines vorgebbaren zweiten Schwellwerts liegt.

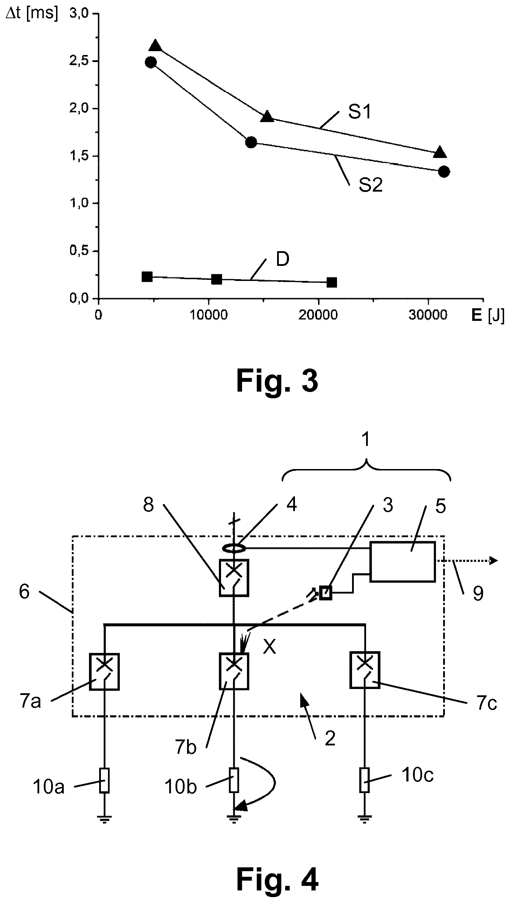

Bei Versuchen hat sich herausgestellt, dass die Differenzzeiten Δt für einen Störlichtbogen und für einen Schaltlichtbogen nur wenig von der Intensität des Lichtbogens abhängen, sondern mehr oder minder konstant sind. Fig. 3 zeigt dazu ein beispielhaftes Diagramm, in dem die Differenzzeit Δt über der Lichtbogen-Energie für einen Schaltlichtbogen zweier verschiedenen Schalter S1, S2 sowie für einen Störlichtbogen, der mit einem Kupferdraht D initiiert wurde, dargestellt ist Vorzugsweise werden der erste Schwellwert und/oder der zweite Schwellwert für das vorgestellte Verfahren nun in einem Bereich von 0,5 ms bis 1,5 ms gewählt. Der erste Schwellwert ist generell niedriger als der zweite Schwellwert. Weitere vorteilhafte Wertebereiche für den ersten Schwellwert und/oder den zweiten Schwellwert sind 0,6 ms bis 1,2 ms und 0,7 ms bis 0,8 ms. In einer besonders vorteilhaften Variante kann für den ersten Schwellwert oder den zweiten Schwellwert der Wert 0,75 ms gewählt werden.

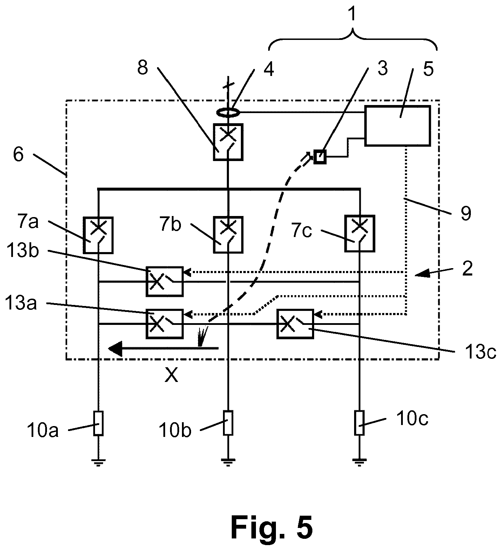

Das heißt nun, dass die Kategorisierung eines Lichtbogens beispielsweise schon nach 0,75 ms und damit sehr schnell zur Verfügung steht. Dementsprechend können sehr schnell (und deutlich schneller als in bekannten Verfahren) Gegenmaßnahmen zum Löschen eines Störlichtbogens ergriffen werden. Beispielsweise kann ein Kurzschlussschalter geschlossen und/oder die betroffene elektrische Anlage vom Netz genommen werden (siehe auch Fig. 5).

Zweckmäßig ist es auch, wenn die Differenzzeit Δt zwischen einem Zeitpunkt t1, zu dem der Strom I einen dritten vorgebbaren Schwellwert überschreitet, und einem Zeitpunkt t2, zu dem die Stärke L des Lichts einen vorgebaren vierten Schwellwert überschreitet, gemessen wird. Das heißt, dass bestimmte Schwellwerte überschritten werden, um eine Kategorisierung auszulösen. Vorzugsweise wird der dritte Schwellwert in einem Bereich vom fünf- bis zwanzigfachen Nennstrom der Zuleitung zu einem Überwachungsbereiche oder eines darin liegenden Schalters gewählt, vorzugsweise beim Zehnfachen. Besitzt der Schalter einen Nennstrom von 150 A, so wird der dritte Schwellwert also günstiger Weise zwischen 750 A und 3 kA gewählt, vorzugsweise bei 1,5 kA. Diese Werte stellen einen guten Kompromiss zwischen einer schnellen Kategorisierung eines Lichtbogens und dem sicheren Erkennen einer Ausnahmesituation dar. Schwellwerte darüber sind möglich, jedoch führen sie zu einer zeitlichen Verzögerung bis zum Erkennen eines Störlichtbogens.

Der vierte Schwellwert wird zweckmäßigerweise in einem Bereich von 20.000 Im/m² bis 200.000 Im/m² gewählt, insbesondere bei 100.000 Im/m². Auch diese Werte stellen einen guten Kompromiss zwischen einer schnellen Kategorisierung eines Lichtbogens und dem sicheren Erkennen einer Ausnahmesituation dar. Schwellwerte darüber sind möglich, jedoch führen sie ebenfalls zu einer zeitlichen Verzögerung bis zum Erkennen eines Störlichtbogens.

Zusätzlich oder alternativ zu den bereits offenbarten Parametern kann auch ein zeitliches Differential des Lichtbobgen-Stroms I und/oder ein zeitliches Differential der Lichtbobgen-Lichtstärke L zur Kategorisierung eines Lichtbogens herangezogen werden. Beispielsweise kann vorgesehen sein, dass eine Messung der Differenzzeit Δt ausgelöst wird, wenn der Lichtbobgen-Strom-Anstieg und/oder der Lichtbobgen-Lichtstärke-Anstieg oberhalb vorgegebener Schwellwerte liegt. Denkbar wäre aber auch, dass eine Messung der Differenzzeit Δt ausgelöst wird, wenn der Lichtbobgen-Strom-Anstieg und die Lichtbobgen-Lichtstärke oberhalb vorgegebener Schwellwerte liegen, oder der Lichtbobgen-Strom und der Lichtbobgen-Lichtstärke-Anstieg.

Fig. 4 zeigt nun eine beispielhafte und symbolhaft dargestellte Vorrichtung 1 zur Kategorisierung eines Lichtbogens X beziehungsweise Detektion eines Störlichtbogens in einem Überwachungsbereich 2, umfassend
- zumindest ein lichtempfindliches Element 3 zum Erfassen von Licht in dem Überwachungsbereich 2,
   eine Strommesseinrichtung 4 zum Messen eines Stroms in einer Zuleitung zum Überwachungsbereich 2 und
- eine Auswerteeinheit 5 zum Ermitteln einer Differenzzeit Δt zwischen dem Erkennen eines von einem Lichtbogen X verursachten Stroms l und eines von dem Lichtbogen X verursachten Lichtblitzes L und zum Kategorisieren des Lichtbogens X als Störlichtbogen, wenn die genannte Differenzzeit Δt unterhalb eines vorgebbaren ersten Schwellwerts liegt.

Fig. 4 zeigt weiterhin einen rein symbolisch dargestellten beispielhaften Schaltschrank 6 mit drei je einer Phase eines Dreiphasensystems zugeordneten Schaltern 7a..7c und einem übergeordneten Schalter 8. Die Schalter 7a..7c und 8 können beispielsweise als Überstromschutzschalter ausgebildet sein. Zudem weist die genannte Vorrichtung 1 respektive die Auswerteeinheit 5 einen Alarmausgang beziehungsweise Schaltausgang 9 auf. An den Schaltschrank 6 sind schließlich auch drei Verbraucher 10a..10c angeschlossen.

Die Funktion der in der Fig. 4 dargestellten Anordnung ist nun wie folgt:
Licht wird vom Überwachungsbereich 2 direkt oder über einen optionalen Lichtleiter an das lichtempfindliche Element 3 geleitet, welches das Licht in ein elektrisches Signal umwandelt. Dieses elektrische Signal wird von der Auswerteeinheit 5 erfasst und ausgewertet. Weiterhin erfasst die Auswerteeinheit 5 mit Hilfe der Strommesseinrichtung 4 einen zum Lichtbogen X führenden Strom l. Durch Starten eines Zeitglieds bei Detektion des Lichtbogens X kann die Differenzzeit Δt gemessen werden. Dies erfolgt vorzugsweise digital, kann prinzipiell aber auch analog durchgeführt werden.

In dem in Fig. 4 dargestellten Fall handelt es sich bei dem Lichtbogen X um einen Schaltlichtbogen, was durch die aus dem Gehäuse des Schalters 7b austretende Gaswolke symbolisiert ist. Beispielsweise kann der Schalter 7b wegen eines Kurzschlusses über dem Verbraucher 10b ausgelöst worden sein. Der Schaltlichtbogen X selbst ist für das lichtempfindliche Element 3 nicht sichtbar, da er innerhalb des genannten Gehäuses brennt.

Das aus dem Gehäuse des Schalters 7b austretende, leuchtende Gas enthält hauptsächlich Metalldampf, der von den abbrennenden Schaltkontakten oder Lichtbogenleit- beziehungsweise Lichtbogenlöschblechen des Schalters 7b stammt. Daneben kann das Gas auch noch andere Bestandteile enthalten, beispielsweise verdampften Kunststoff vom Gehäuse des Schalters 7b.

Die von der Auswerteeinheit 5 ermittelte Differenzzeit Δt ist vergleichsweise lange, jedenfalls länger als die einem Störlichtbogen zugeordnete Differenzzeit Δt. Denkbar sind in diesem Zusammenhang alle im Hinblick auf die Fig. 1 und Fig. 2 offenbarten Schwellwerte und Verfahrensvarianten.

Generell kann die Auswerteeinheit 5 als Analogschaltung, Digitalschaltung oder Mischung aus analoger und digitaler Schaltung aufgebaut sein. Insbesondere kann die Auswerteeinheit 5 einen Mikroprozessor aufweisen, in welcher ein Softwarealgorithmus zur Durchführung der oben offenbarten Verfahrensschritte ausgeführt wird.

Denkbar wäre weiterhin, dass das lichtempfindliche Element 3 und die Auswerteeinheit 5 eine bauliche Einheit bilden. Das lichtempfindliche Element 3 kann zudem zur Ausgabe eines Signals in analoger Form und/oder digitaler Form ausgebildet sein.

Fig. 5 zeigt nun eine Anordnung, die der in Fig. 4 dargestellten Anordnung sehr ähnlich ist. In diesem Beispiel liegt jedoch kein Schaltlichtbogen, sondern ein zwischen den Phasen brennender Störlichtbogen X vor. Die von der Auswerteeinheit 5 ermittelte Differenzzeit Δt ist daher vergleichsweise kurz, jedenfalls kürzer als die einem Schaltlichtbogen zugeordnete Differenzzeit Δt.

Zusätzlich zu den bereits in Fig. 4 gezeigten Elementen weist die Anordnung nach Fig. 5 Schaltgeräte 13a..34c auf, welche die einzelnen Phasen gegeneinander kurzschließen können. Das erste Schaltsignal 9 kann in diesem Fall beispielsweise an die Eingänge der Schaltgeräte 13a..13c geführt sein. Tritt ein Fehlerfall auf, so werden die Schaltgeräte 13a..13c geschlossen und löschen damit den zwischen den Phasen brennenden Lichtbogen X. Der durch den Kurschluss hervorgerufene Überstrom löst in Folge die Schalter 7a..7c beziehungsweise den Schalter 8 aus, wodurch die Anlage letztlich vom Stromnetz getrennt wird. Selbstverständlich kann das erste Schaltsignal 9 auch aus dem Schaltschrank 6 heraus geführt sein und beispielsweise eine Alarmierung bewirken. Denkbar ist auch, dass die Schaltgeräte 13a..13c mit der Masse verbunden sind, wodurch die Phasen mit Hilfe der Schaltgeräte 13a..13c demzufolge gegen Masse (und gegeneinander) kurzgeschlossen werden können.

Selbstverständlich ist das Auftreten eines Schaltlichtbogens oder eines Störlichtbogens nicht an eine bestimmte Bauweise einer elektrischen Anlage gebunden, und in der Anordnung nach Fig. 4 kann natürlich auch ein Störlichtbogen auftreten, und in der Anordnung nach Fig. 5 kann natürlich auch ein Schaltlichtbogen auftreten.

Vorzugsweise wird über den Alarmausgang beziehungsweise Schaltausgang 9 ein erster Alarm beziehungsweise ein erstes Schaltsignal ausgegeben, wenn im Überwachungsbereich 3 ein Störlichtbogen X festgestellt wird. Selbstverständlich, kann die Detektion eines Störlichtbogens X auch auf andere Weise weitergeleitet werden. Insbesondere ist es auch möglich, dass zusätzlich zum Störlichtbogen X oder alternativ dazu die Detektion eines Schaltlichtbogens X respektive das Auftreten von Licht, das weder einem Störlichtbogen X noch einem Schaltlichtbogen X zuordenbar ist, gemeldet wird (zweites und drittes Alarmsignal/Schaltsignal). Letzteres kann beispielsweise dann vorkommen, wenn die Differenzzeit Δt zwischen dem ersten und dem zweiten Schwellwert liegt.

Beispielsweise kann das zweite und/oder dritte Schaltsignal auf ein Schaltgerät geführt werden und einen Stromkreis trennen oder schließen. Insbesondere kann dem Überwachungspersonal oder einer übergeordneten Steuerung auf diese Weise zusätzliche Information zur Verfügung gestellt werden. Beispielsweise kann das dritte Alarmsignal auch eine Fehlfunktion der erfindungsgemäßen Vorrichtung 1 kennzeichnen.

Zusammenfassend kann die erfindungsgemäße Vorrichtung 1 einen im Schaltschrank 6 brennenden Störlichtbogen X sicher von einem Schaltlichtbogen X unterscheiden und gibt somit kein fälschliches Alarmsignal beziehungsweise Schaltsignal aus. Dieses wird nur ausgegeben, wenn ein Störlichtbogen X im Schaltschrank 6 brennt, beispielsweise weil in den Schaltschrank 6 kriechende Tiere oder auch herunterfallendes Werkzeug die Isolation beziehungsweise Funkenstrecke zwischen zwei Leitern auf unterschiedlichem Spannungspotential so stark herabsetzen, das ein solcher Störlichtbogen X entsteht.

Abschließend wird angemerkt, dass die Vorrichtung 1 und der Schaltschrank 6 respektive deren oder dessen Bauteile nicht notwendigerweise maßstäblich dargestellt sind und diese daher auch andere Proportionen aufweisen können. Weiterhin können eine Vorrichtung 1 zur Kategorisierung eines Lichtbogens X respektive der Schaltschrank 6 auch mehr oder weniger Bauteile als dargestellt umfassen. Lageangaben (z.B. "oben", "unten", "links", "rechts", etc.) sind auf die jeweils beschriebene Figur bezogen und sind bei einer Lageänderung sinngemäß an die neue Lage anzupassen. Schließlich wird angemerkt, dass sich die obigen Ausgestaltungen und Weiterbildungen der Erfindung auf beliebige Art und Weise kombinieren lassen.

## Patentansprüche

1. Verfahren zur Kategorisierung eines Lichtbogens (X) in einem Überwachungsbereich (2), bei dem ein Strom (I) in einer Zuleitung zum Überwachungsbereich (2) sowie ein im Überwachungsbereichs (2) emittiertes Licht erfasst wird, wobei der Lichtbogen (X) als Störlichtbogen kategorisiert wird, wenn eine Differenzzeit (Δt) zwischen dem Erkennen eines von einem Lichtbogen (X) verursachten Stroms (I) und eines von dem Lichtbogen (X) verursachten Lichtblitzes unterhalb eines vorgebbaren ersten Schwellwerts liegt,
**dadurch gekennzeichnet, dass**
der Lichtbogen (X) als Schaltlichtbogen kategorisiert wird, wenn die genannte Differenzzeit (Δt) oberhalb eines vorgebbaren zweiten Schwellwerts liegt, wobei der erste Schwellwert niedriger ist als der zweite Schwellwert.

2. Verfahren nach Anspruch 1, **dadurch gekennzeichnet, dass** die Differenzzeit (Δt) zwischen einem Zeitpunkt (t1), zu dem der Strom (I) einen dritten vorgebbaren Schwellwert überschreitet, und einem Zeitpunkt (t2), zu dem die Stärke des Lichts (L) einen vorgebaren vierten Schwellwert überschreitet, gemessen wird.

3. Verfahren nach Anspruch 1 oder 2, **dadurch gekennzeichnet, dass** der erste Schwellwert und/oder der zweite Schwellwert in einem Bereich von 0,5 ms bis 1,5 ms gewählt wird.

4. Verfahren nach Anspruch 3, **dadurch gekennzeichnet, dass** für den ersten Schwellwert oder den zweiten Schwellwert der Wert 0,75 ms gewählt wird.

5. Verfahren nach einem der Ansprüche 2 bis 4, **dadurch gekennzeichnet, dass** der dritte Schwellwert in einem Bereich von Fünffachen bis Zwanzigfachen des Nennstroms der Zuleitung zum Überwachungsbereich (2) gewählt wird.

6. Verfahren nach einem der Ansprüche 2 bis 5, **dadurch gekennzeichnet, dass** der vierte Schwellwert in einem Bereich von 20.000 Im/m² bis 200.000 Im/m² gewählt wird.

7. Verfahren nach einem der Ansprüche 1 bis 6, **dadurch gekennzeichnet, dass** ein erster Alarm beziehungsweise ein erstes Schaltsignal ausgegeben wird, wenn im Überwachungsbereich (2) ein Störlichtbogen festgestellt wird.

8. Verfahren nach Anspruch 7, **dadurch gekennzeichnet, dass** ein zweiter Alarm beziehungsweise ein zweites Schaltsignal ausgegeben wird, wenn im Überwachungsbereich (2) ein Schaltlichtbogen festgestellt wird und/oder ein dritter Alarm beziehungsweise ein drittes Schaltsignal, wenn das im Überwachungsbereich (2) erfasste Licht weder einem Störlichtbogen noch einem Schaltlichtbogen zuordenbar ist.

9. Verfahren nach einem der Ansprüche 1 bis 8, **dadurch gekennzeichnet, dass** der Überwachungsbereich (2) innerhalb eines Schaltschranks (6) angeordnet ist.

10. Vorrichtung (1) zur Kategorisierung eines Lichtbogens (X) in einem Überwachungsbereich (2), umfassend
- zumindest ein lichtempfindliches Element (3) zum Erfassen von Licht im Überwachungsbereich (2),
eine Strommesseinrichtung (4) zum Messen eines Stroms in einer Zuleitung zum Überwachungsbereich (2),
- eine Auswerteeinheit (5) zum Ermitteln einer Differenzzeit (Δt) zwischen dem Erkennen eines von einem Lichtbogen (X) verursachten Stroms (I) und eines von dem Lichtbogen (X) verursachten Lichtblitzes und zum Kategorisieren des Lichtbogens (X) als Störlichtbogen, wenn die genannte Differenzzeit (Δt) unterhalb eines vorgebbaren ersten Schwellwerts liegt,
**dadurch gekennzeichnet, dass**
die Auswerteeinheit (5) weiterhin dazu ausgebildet ist, den Lichtbogen (X) als Schaltlichtbogen zu kategorisieren, wenn die genannte Differenzzeit (Δt) oberhalb eines vorgebbaren zweiten Schwellwerts liegt, wobei der erste Schwellwert niedriger ist als der zweite Schwellwert.

11. Vorrichtung (1) nach Anspruch 10, **dadurch gekennzeichnet, dass** die Auswerteeinheit (5) einen Ausgang (9) umfasst, welcher zur Ausgabe eines ersten Alarms/Schaltsignals im Falle eines im Überwachungsbereich (2) festgestellten Störlichtbogens und/oder eines zweiten Alarms/Schaltsignals im Falle eines im Überwachungsbereich (2) festgestellten Schaltlichtbogens und/oder eines dritten Alarms/Schaltsignals im Falle, dass das im Überwachungsbereich (2) erfasste Licht weder einem Störlichtbogen noch einem Schaltlichtbogen zuordenbar ist, ausgebildet ist.

12. Schaltschrank (6) mit zumindest einem Schaltgerät (13a.. 13c), **gekennzeichnet durch** eine Vorrichtung (1) nach Anspruch 11, deren Ausgang (9) zur Ausgabe des ersten Alarms/Schaltsignals mit einem Schalteingang des zumindest einen Schaltgeräts (13a..13c) verbunden ist.

13. Verwendung eines Verfahrens nach einem der Ansprüche 1 bis 9 beziehungsweise einer Vorrichtung (1) nach einem der Ansprüche 10 bis 11 zur Kategorisierung eines Lichtbogens (X) in einem Überwachungsbereich (2), der in einem Schaltschrank (6) angeordnet ist.

## Claims

1. Method for categorizing an arc (X) in a monitored region (2), in which method a current (I) in a feed line to the monitored region (2) and a light emitted in the monitored region (2) are detected, the arc (X) being categorized as fault arc if a time difference (Δt) between the detection of a current (I) caused by an arc (X) and a flash of light caused by the arc (X) is below a predeterminable first threshold value,
**characterized in that**
the arc (X) is categorized as a switching arc if said difference time (Δt) is above a predeterminable second threshold value, the first threshold value being lower than the second threshold value.

2. Method according to claim 1, **characterized in that** the time difference (Δt) between a time (t1) at which the current (I) exceeds a third predeterminable threshold value and a time (t2) at which the intensity of the light (L) exceeds a predeterminable fourth threshold value is measured.

3. Method according to either claim 1 or claim 2, **characterized in that** the first threshold value and/or the second threshold value is selected in a range of from 0.5 ms to 1.5 ms.

4. Method according to claim 3, **characterized in that** the value 0.75 ms is selected for the first threshold value or the second threshold value.

5. Method according to any of claims 2 to 4, **characterized in that** the third threshold value is selected in a range of from five to twenty times the nominal current of the feed line to the monitored region (2).

6. Method according to any of claims 2 to 5, **characterized in that** the fourth threshold value is selected in a range of from 20,000 Im/m² to 200,000 Im/m².

7. Method according to any of claims 1 to 6, **characterized in that** a first alarm or a first switching signal is output if a fault arc is detected in the monitored region (2).

8. Method according to claim 7, **characterized in that** a second alarm or a second switching signal is output if a switching arc is detected in the monitored region (2) and/or a third alarm or a third switching signal if the light detected in the monitored region (2) cannot be assigned to either a fault arc or a switching arc.

9. Method according to any of claims 1 to 8, **characterized in that** the monitored region (2) is arranged within a control cabinet (6).

10. Apparatus (1) for categorizing an arc (X) in a monitored region (2), comprising
- at least one light-sensitive element (3) for detecting light in the monitored region (2),
- a current measuring device (4) for measuring a current in a feed line to the monitored region (2),
- an evaluation unit (5) for determining a time difference (Δt) between the detection of a current (I) caused by an arc (X) and a flash of light caused by the arc (X) and for categorizing the arc (X) as a fault arc if said difference time (Δt) is below a predeterminable first threshold value,
**characterized in that**
the evaluation unit (5) is also designed to categorize the arc (X) as a switching arc if said difference time (Δt) is above a predeterminable second threshold value, the first threshold value being lower than the second threshold value.

11. Apparatus (1) according to claim 10, **characterized in that** the evaluation unit (5) comprises an output (9) which is used to output a first alarm/switching signal in the event of a fault arc detected in the monitored region (2) and/or a second alarm/switching signal in the event of a switching arc detected in the monitored region (2) and/or a third alarm/switching signal in the event that the light detected in the monitored region (2) cannot be assigned to either a fault arc or a switching arc.

12. Switching cabinet (6) having at least one switching device (13a ... 13c), **characterized by** an apparatus (1) according to claim 11, the output (9) of which for outputting the first alarm/switching signal is connected to a switching input of the at least one switching device (13a ... 13c).

13. Use of a method according to any of claims 1 to 9 or of an apparatus (1) according to any of claims 10 to 11 for categorizing an arc (X) in a monitored region (2) which is arranged in a switch cabinet (6).

## Revendications

1. Procédé de catégorisation d'un arc électrique (X) dans une zone de surveillance (2), dans lequel un courant (I) dans une ligne d'amenée à la zone de surveillance (2) ainsi qu'une lumière émise dans la zone de surveillance (2) sont détectés, l'arc électrique (X) étant catégorisé comme arc électrique parasite lorsqu'une différence de temps (Δt) entre la détection d'un courant (I) provoqué par un arc électrique (X) et un éclair de lumière provoqué par l'arc électrique (X) est inférieure à une première valeur seuil pouvant être prédéfinie,
**caractérisé en ce que** l'arc électrique (X) est catégorisé comme arc électrique de commutation lorsque ladite différence de temps (Δt) est supérieure à une deuxième valeur seuil pouvant être prédéfinie, la première valeur seuil étant inférieure à la deuxième valeur seuil.

2. Procédé selon la revendication 1, **caractérisé en ce que** la différence de temps (Δt) entre un instant (t1) auquel le courant (I) dépasse une troisième valeur seuil pouvant être prédéfinie et un instant (t2) auquel l'intensité de la lumière (L) dépasse une quatrième valeur seuil pouvant être prédéfinie est mesurée.

3. Procédé selon la revendication 1 ou 2, **caractérisé en ce que** la première valeur seuil et/ou la deuxième valeur seuil sont choisies dans une plage de 0,5 ms à 1,5 ms.

4. Procédé selon la revendication 3, **caractérisé en ce que** la valeur 0,75 ms est choisie pour la première valeur seuil ou la deuxième valeur seuil.

5. Procédé selon l'une des revendications 2 à 4, **caractérisé en ce que** la troisième valeur seuil est choisie dans une plage de cinq à vingt fois le courant nominal de la ligne d'amenée à la zone de surveillance (2).

6. Procédé selon l'une des revendications 2 à 5, **caractérisé en ce que** la quatrième valeur seuil est choisie dans une plage de 20 000 Im/m² à 200 000 Im/m².

7. Procédé selon l'une des revendications 1 à 6, **caractérisé en ce qu'**une première alarme ou un premier signal de commutation est émis(e) lorsqu'un arc électrique parasite est détecté dans la zone de surveillance (2).

8. Procédé selon la revendication 7, **caractérisé en ce qu'**une deuxième alarme ou un deuxième signal de commutation est émis(e) lorsqu'un arc électrique de commutation est détecté dans la zone de surveillance (2) et/ou une troisième alarme ou un troisième signal de commutation est émis(e) lorsque la lumière détectée dans la zone de surveillance (2) ne peut être attribuée ni à un arc électrique parasite ni à un arc électrique de commutation.

9. Procédé selon l'une des revendications 1 à 8, **caractérisé en ce que** la zone de surveillance (2) est disposée à l'intérieur d'une armoire de distribution (6).

10. Dispositif (1) de catégorisation d'un arc électrique (X) dans une zone de surveillance (2), comprenant
- au moins un élément photosensible (3) destiné à détecter de la lumière dans la zone de surveillance (2),
un moyen de mesure de courant (4) destiné à mesurer un courant dans une ligne d'amenée à la zone de surveillance (2),
- une unité d'évaluation (5) destinée à déterminer une différence de temps (Δt) entre la détection d'un courant (I) provoqué par un arc électrique (X) et un éclair de lumière provoqué par l'arc électrique (X), et destinée à catégoriser l'arc électrique (X) comme arc électrique parasite lorsque ladite différence de temps (Δt) est inférieure à une première valeur seuil pouvant être prédéfinie, **caractérisé en ce que**
l'unité d'évaluation (5) est également conçue pour catégoriser l'arc électrique (X) comme arc électrique de commutation lorsque ladite différence de temps (Δt) est supérieure à une deuxième valeur seuil pouvant être prédéfinie, la première valeur seuil étant inférieure à la deuxième valeur seuil.

11. Dispositif (1) selon la revendication 10, **caractérisé en ce que** l'unité d'évaluation (5) comprend une sortie (9), laquelle est conçue pour émettre une première alarme/un premier signal de commutation en cas de détection d'un arc électrique parasite dans la zone de surveillance (2) et/ou une deuxième alarme/un deuxième signal de commutation en cas de détection d'un arc électrique de commutation dans la zone de surveillance (2) et/ou une troisième alarme/un troisième signal de commutation dans le cas où la lumière détectée dans la zone de surveillance (2) ne peut être attribuée ni à un arc électrique parasite ni à un arc électrique de commutation.

12. Armoire de distribution (6) comportant au moins un appareil de commutation (13a... 13c), **caractérisée par** un dispositif (1) selon la revendication 11, dont la sortie (9) destinée à émettre la première alarme/le premier signal de commutation est connectée à une entrée de commutation de l'au moins un appareil de commutation (13a... 13c).

13. Utilisation d'un procédé selon l'une des revendications 1 à 9 ou d'un dispositif (1) selon l'une des revendications 10 à 11, pour la catégorisation d'un arc électrique (X) dans une zone de surveillance (2) qui est disposée dans une armoire de distribution (6).
